# EUROPÄISCHE PATENTSCHRIFT

(11) **EP 1 143 078 B1**
(45) Veröffentlichungstag und Bekanntmachung des Hinweises auf die Patenterteilung: **28.06.2006**
(21) Anmeldenummer: 01106767.5
(22) Anmeldetag: 17.03.2001
(51) Int. Cl.: E03C 1/04

(54) **Wasserarmatur mit verschwenkbarem Auslaufkörper**
Water tap with rotatable spout
Robinet avec bec rotatif

(30) Priorität: 06.04.2000 DE 10016976
(43) Veröffentlichungstag der Anmeldung: 10.10.2001
(73) Patentinhaber: Grohe AG, 58675 Hemer (DE)
(72) Erfinder: Brandebusemeyer, Heinz, 58706 Menden (DE)

(56) Entgegenhaltungen:
- EP-A- 0 117 504
- EP-A- 0 195 999
- EP-A- 0 765 974
- EP-A- 0 860 643
- DE-U- 1 758 095
- GB-A- 1 367 721
- US-A- 5 301 715

## Beschreibung

Die Erfindung betrifft eine Wasserarmatur mit einem Auslaufkörper, insbesondere für ein Wasch- und/oder Spülbecken, der mit einem Endbereich gedichtet in einem an der Wasserarmatur angeordneten Rohrstutzen verschwenkbar gelagert und von einer radial in eine umlaufende Ringnut am Außenmantel des Endbereichs einbringbaren Sicherungsscheibe axial in der Stecklage gehalten ist.

Ein derartiger Auslaufkörper ist beispielsweise aus dem deutschen Gebrauchsmuster 1 758 095 bekannt. Hierbei ist der rohrförmige Auslaufkörper mit einem Endbereich in einen Rohrstutzen des Armaturenkörpers mit einem Dichtring gedichtet verschwenkbar angeordnet. Zur Sicherung in der Stecklage ist eine einseitig offene Vorsteck- oder Sicherungsscheibe vorgesehen, die radial in eine Ringnut des Auslaufkörpers eingeschoben wird. In der Einschubstellung kann dann eine Überwurfmutter übergestreift und mit dem Armaturenkörper verschraubt werden, so dass eine axiale Sicherung gewährleistet wird.
Alternativ ist es darüber hinaus durch offenkundige Vorbenutzung bekannt, die Sicherungsscheibe auch über einer radialen Schlitz in einem am Armaturenkörper angeordneter Rohrstutzen einzuführen und damit die Stecklage des Auslaufkörpers in axialer Richtung zu sichern.
Bei diesen bekannten Ausbildungen wurde festgestellt, dass die Sicherungsscheibe im Bereich der Ringnut relativ schnell verschleißen kann, so dass schon nach einer relativ kurzen Betriebszeit Beeinträchtigungen im Schwenkbereich auftreten können, was unerwünscht ist.
Ferner ist aus der EP-A-0 195 999 ein Mischventil bekannt, bei dem ein Hebelkopfgehäuse unter Zwischenlagerung einer aus gut gleitfähigem Kunststoff hergestellten Hülse auf einem Ansatz drehbar gelagert ist.

Der Erfindung liegt die Aufgabe zugrunde, die im Oberbegriff des Anspruchs 1 angegebene Wasserarmatur zu verbessern und insbesondere so auszubilden, dass die Auslaufkörperhalterung verschleißarm über einen relativ langen Zeitraum eine gleichbleibende Verschwenkung ermöglicht.

Diese Aufgabe wird erfindungsgemäß dadurch gelöst, dass in der Ringnut des Endbereichs ein Gleitring aus gut gleitfähigem Werkstoff angeordnet ist, an dessen äußeren Mantelseite eine zweite umlaufende Ringnut ausgebildet ist, in die die Sicherungsscheibe in der Stecklage als Axiallager einfasst.

Weitere Ausgestaltungen der Erfindung sind in den Ansprüchen 2 bis 8 angegeben.

Mit den vorgeschlagenen Maßnahmen wird eine dauerhafte und gleichwirkende Axiallagerung geschaffen, die relativ wenig Platz benötigt und kostengünstig realisiert werden kann.

Ein Ausführungsbeispiel der Erfindung ist in der Zeichnung dargestellt und wird im Folgenden näher beschrieben. Es zeigt
- Fig. 1: eine sanitäre Wasserarmatur in Seitenansicht, teilweise geschnitten;
- Fig. 2: einen Teil der in Fig. 1 gezeigten Wasserarmatur in vergrößerter Darstellung im Längsschnitt;
- Fig. 3: die in Fig. 1 und 2 gezeigte Sicherungsscheibe in vergrößerter Darstellung in der Schnittebene III der Fig. 4;
- Fig. 4: die in Fig. 3 gezeigte Sicherungsscheibe in Draufsicht;
- Fig. 5: den in Fig. 1 und 2 gezeigten Sicherungsring in vergrößerter Darstellung in der Schnittebene V der Fig. 6;
- Fig. 6: den in Fig. 5 gezeigten Gleitring in der Schnittebene VI.

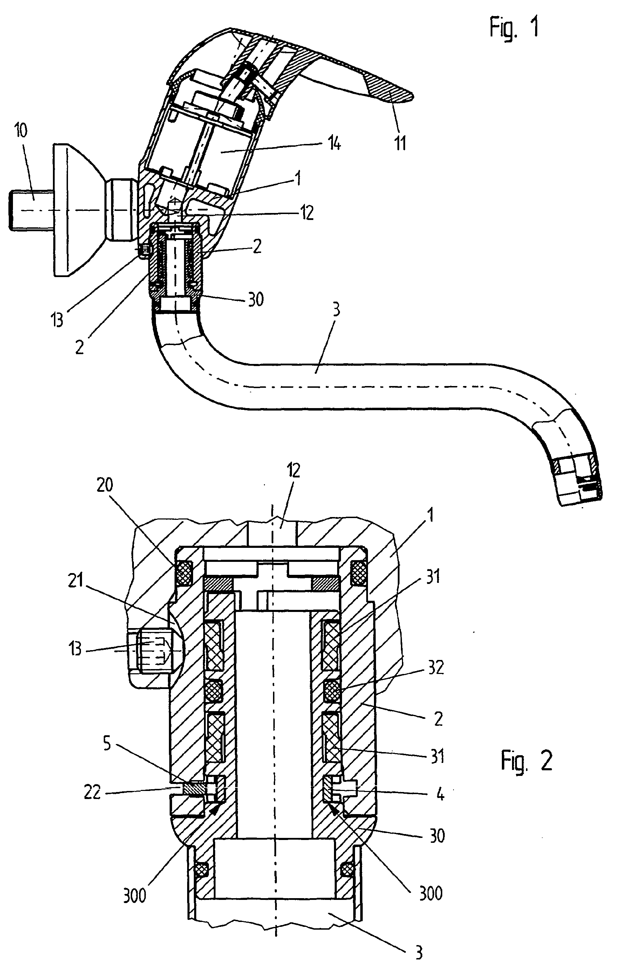

Die in Fig. 1 gezeigte Wasserauslaufarmatur weist einen Armaturenkörper 1 auf, der jeweils mit einem Anschlussstück 10 an das Kaltwasserversorgungsleitungsnetz und das Warmwasserversorgungsleitungsnetz angeschlossen ist. In der Zeichnung ist lediglich ein Anschlussstück 10 gezeigt, das zweite Anschlussstück befindet sich vor der Zeichnungsebene. In dem Armaturenkörper 1 ist eine Mischventilkartusche 14 angeordnet, mit der das zufließende Kalt- und Warmwasser wahlweise gemischt werden kann und die Gesamtausflussmenge einstellbar ist. Zu diesem Zweck ist am oberen Bereich des Armaturenkörpers ein Stellgriff 11 angeordnet, mit dem in einem ersten Freiheitsgrad die Gesamtausflussmenge und in einem zweiten Freiheitsgrad das Mischungsverhältnis des zufließenden Kalt- und Warmwassers bzw. die Mischwassertemperatur eingestellt werden kann. Das in der Mischventilkartusche 14 erzeugte Mischwasser wird über einen Auslasskanal 12 im Armaturenkörper 1 einem Rohrstutzen 2 zugeleitet. Der Rohrstutzen 2 ist mit Hilfe einer Radialausnehmung 21 und einer Radialschraube 13 am Armaturenkörper 1 in einer Aufnahmebohrung in der Stecklage fixiert und mit einem Dichtring 20 zum Armaturenkörper 1 abgedichtet. Alternativ kann selbstverständlich der Rohrstutzen 2 auch einstückig mit dem Armaturenkörper 1 ausgebildet sein.

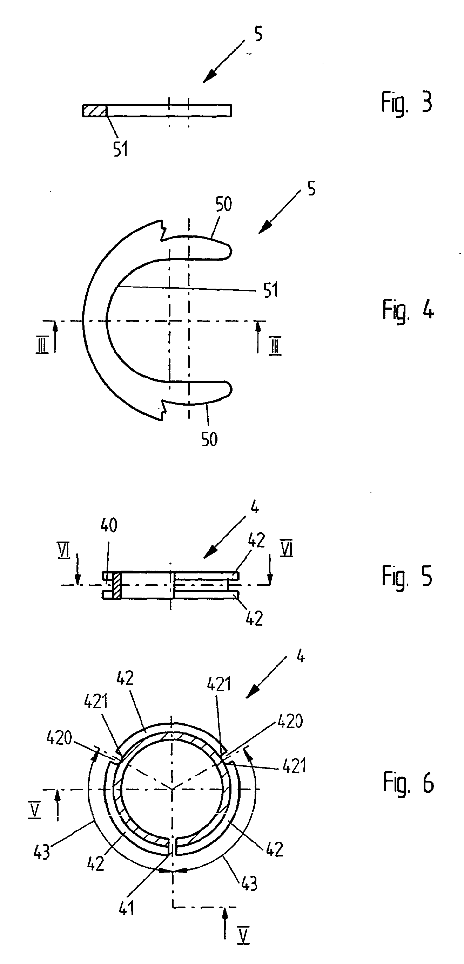

In dem Rohrstutzen 2 ist ein Endbereich 30 eines rohrförmig ausgebildeten Auslaufkörpers 3 angeordnet. Wie es insbesondere aus Fig. 2 ersichtlich ist, ist hierbei der Endbereich 30 mit zwei axial zueinander versetzt angeordneten Radiallagerringen 31 und einem Dichtring 32 verschwenkbar in dem Rohrstutzen 2 angeordnet. Außerdem ist in dem Endbereich 30 eine umlaufende Ringnut 300 im Mantelbereich vorgesehen, in der ein im Querschnitt U-förmiger Gleitring 4, wie er insbesondere aus Fig. 5 und 6 der Zeichnung zu entnehmen ist, eingesprengt ist.
Der Gleitring 4 ist aus gut gleitfähigem Werkstoff hergestellt, wie beispielsweise aus dem Kunststoffwerkstoff Polyoximethylen.
Der Gleitring 4 weist dabei an seiner Außenmantelfläche eine Ringnut 40 auf, in die eine einseitig offene Sicherungsscheibe 5 radial einschiebbar ist.
Damit der Gleitring 4 über den Auslaufkörper überstreifbar ist, weist er einen Axialschlitz 41 auf, so dass er beim Überstreifen über den Endbereich 30 sich elastisch aufweiten und anschließend in die Ringnut 300 zurückfedern kann. Zur Erleichterung des elastischen Aufweitens sind hierbei in den die Ringnut 40 begrenzenden Seitenwänden 42 Ausnehmungen 420 eingebracht. Zweckmäßig können die Ausnehmungen 420, vom Axialschlitz 41 ausgehend, mit einem Abstand eines Bo-gens 43 von etwa 120° zu beiden Seiten und in beiden Seitenwänden 42 eingebracht werden. Die jeweilige Ausnehmung 420 weist hierbei im Querschnitt etwa Rechteckform auf, wobei die Ecken im Grund eine Verrundung 421 aufweisen.

Der rohrförmige Auslaufkörper 3 kann mit dem Endbereich 30 in den Rohrstutzen 2 eingesteckt werden. In der Stecklage wird dann die in Fig. 3 und 4 der Zeichnung näher dargestellte einseitig offene Sicherungsscheibe 5 in einen Radialschlitz 22 des Rohrstutzens 2 eingesteckt, wobei die Sicherungsscheibe mit ballig ausgebildeten Seitenflächen 50 in der Stecklage im Rohrstutzen 2 verrastet. In der Stecklage greift außerdem die Sicherungsscheibe 5 mit ihrer Innenwandung 51 in die Ringnut 40 des Gleitrings 4 ein und bildet somit ein verschleißarmes langlebiges Axiallager für den Auslaufkörper 3.
Als besonders günstige, weil langlebige, Axiallageranordnung hat sich erwiesen, wenn die Sicherungsscheibe 5 sowie der Endbereich 30 aus Messing hergestellt sind und der Gleitring 4 aus Polyoximethylen besteht.

## Patentansprüche

1. Wasserarmatur mit einem Auslaufkörper (3), insbesondere für ein Wasch- und/oder Spülbecken, der mit einem Endbereich (30) gedichtet in einem an der Wasserarmatur angeordneten Rohrstutzen (2) verschwenkbar gelagert und von einer radial in eine umlaufende Ringnut (300) am Außenmantel des Endbereichs (30) einbringbaren Sicherungsscheibe (5) axial in der Stecklage gehalten ist, **dadurch gekennzeichnet, dass** in der Ringnut (300) des Endbereichs (30) ein Gleitring (4) aus gut gleitfähigem Werkstoff angeordnet ist, an dessen äußeren Mantelseite eine zweite umlaufende Ringnut (40) ausgebildet ist, in die die Sicherungsscheibe (5) in der Stecklage als Axiallager einfasst.

2. Wasserarmatur nach Anspruch 1, **dadurch gekennzeichnet, dass** der Querschnitt des Gleitrings (4) etwa U-förmig ausgebildet ist.

3. Wasserarmatur nach Anspruch 1 oder 2, **dadurch gekennzeichnet, dass** der Gleitring (4) aus Kunststoff, vorzugsweise aus Polyoximethylen, hergestellt ist.

4. Wasserarmatur nach wenigstens einem der Ansprüche 1 bis 3, **dadurch gekennzeichnet, dass** die Sicherungsscheibe (5) aus Metall, vorzugsweise aus Messing, hergestellt ist.

5. Wasserarmatur nach wenigstens einem der Ansprüche 1 bis 4, **dadurch gekennzeichnet, dass** der Gleitring (4) mit einem Axialschlitz (41) unterteilt ist, so **dass** der Gleitring (4) sich beim Überstreifen über den Endbereich (30) elastisch aufweitet und anschließend in die Ringnut (300) zurückspringt.

6. Wasserarmatur nach Anspruch 5, **dadurch gekennzeichnet, dass** der im Querschnitt U-förmig ausgebildete Gleitring (4) in seinen Seitenwänden (42) mit Abstand zum Axialschlitz (41) eine oder mehrere Ausnehmung(en) (420) vorgesehen ist (sind), so **dass** eine erleichterte federnde Aufweitung möglich ist.

7. Wasserarmatur nach Anspruch 5 oder 6, **dadurch gekennzeichnet, dass** der Gleitring (4), von dem unterteilenden Axialschlitz (41) ausgehend, nach einem Bogen (43) von etwa 120° auf beiden Seiten jeweils eine Ausnehmung (420) in den beiden Seitenwänden (42) aufweist.

8. Wasserarmatur nach Anspruch 6 oder 7, **dadurch gekennzeichnet, dass** die Ausnehmungen (420) im Querschnitt etwa rechteckig geformt sind, wobei sie im Grund der Ecken eine Verrundung (421) aufweisen.

## Claims

1. Water fitting having an outlet body (3), especially for a wash-basin or sink, which is swivel mounted in a leak-tight manner by means of an end region (30) in a pipe socket (2) arranged on the water fitting and which is held axially in the inserted position by a retaining washer (5) which can be introduced radially into a peripheral annular groove (300) in the outer casing of the end region (30), **characterised in that** a slide ring (4) of low-friction material is arranged in the annular groove (300) of the end region (30), in the outer casing side of which slide ring (4) there is formed a second peripheral annular groove (40) into which the retaining washer (5) engages as axial bearing in the inserted position.

2. Water fitting according to claim 1, **characterised in that** the cross-section of the slide ring (4) is approximately U-shaped.

3. Water fitting according to claim 1 or 2, **characterised in that** the slide ring (4) is made of plastics material, preferably of polyoxymethylene.

4. Water fitting according to at least one of claims 1 to 3, **characterised in that** the retaining washer (5) is made of metal, preferably of brass.

5. Water fitting according to at least one of claims 1 to 4, **characterised in that** the slide ring (4) is divided by an axial slot (41) so that when the slide ring (4) is slipped over the end region (30), it opens up resiliently and then springs back into the annular groove (300).

6. Water fitting according to claim 5, **characterised in that** the slide ring (4) of U-shaped cross-section is provided in its side walls (42), at a spacing from the axial slot (41), with one or more recess(es) (420) so that easier resilient opening up is possible.

7. Water fitting according to claim 5 or 6, **characterised in that**, starting from the dividing axial slot (41), the slide ring (4) has on each side, following a bend (43) of approximately 120°, a recess (420) in each side wall (42).

8. Water fitting according to claim 6 or 7, **characterised in that** the recesses (420) are approximately rectangular in cross-section, with a rounded portion (421) at the bottom of the corners.

## Revendications

1. Robinet à eau comportant un organe de sortie (3) notamment pour un évier et/ou un bac de rinçage, fixé par une zone d'extrémité (30) de manière étanche contre un ajutage tubulaire (2) du robinet en étant monté pivotant et tenu en position enfichée, axialement, par un disque de fixation (5) engagé dans une rainure annulaire (300) périphérique de l'enveloppe extérieure de la zone d'extrémité (30),
**caractérisé en ce que**
la rainure annulaire (300) de la zone d'extrémité (30) reçoit une bague de glissement (4) en une matière ayant de bonnes caractéristiques de glissement et dont la surface-enveloppe extérieure comporte une seconde rainure annulaire périphérique (40) dans laquelle vient prendre le disque de fixation (5) en position engagée pour constituer un palier axial.

2. Robinet à eau selon la revendication 1,
**caractérisé en ce que**
la section de la bague de glissement (4) a sensiblement une forme de U.

3. Robinet à eau selon la revendication 1 ou 2,
**caractérisé en ce que**
la bague de glissement (4) est en matière plastique, de préférence en polyoxyméthylène.

4. Robinet à eau selon au moins l'une des revendications 1 à 3,
**caractérisé en ce que**
le disque de fixation (5) est en métal, de préférence en laiton.

5. Robinet à eau selon au moins l'une des revendications 1 à 4,
**caractérisé en ce que**
la bague de glissement (4) est subdivisée par une fente axiale (41) de façon à s'élargir élastiquement lorsque la bague de coulissement (4) passe par-dessus la zone d'extrémité (30) et ensuite elle revient dans la rainure annulaire (300).

6. Robinet à eau selon la revendications 5,
**caractérisé en ce que**
dans ses parois latérales (42), la bague de glissement (4) à section en forme de U comporte une ou plusieurs cavités (420) à distance de la fente axiale (41) pour faciliter l'ouverture élastique.

7. Robinet à eau selon la revendications 5 ou 6,
**caractérisé en ce que**
partant de la fente axiale (41) qui la subdivise, la bague de glissement (4) comporte sur un arc (43) d'environ 120° partant des deux côtés, chaque fois une cavité (420) dans les deux parois latérales (42).

8. Robinet à eau selon les revendications 6 ou 7,
**caractérisé en ce que**
les cavités (420) ont une section sensiblement rectangulaire et le fond des coins comporte un arrondi (421).
